# NEUE EUROPÄISCHE PATENTSCHRIFT

(11) **EP 2 097 676 B2**
(45) Veröffentlichungstag und Bekanntmachung des Hinweises auf die Entscheidung über den Einspruch: **07.06.2023**
(45) Hinweis auf die Patenterteilung: 10.08.2016
(21) Anmeldenummer: 07822504.2
(22) Anmeldetag: 12.11.2007
(51) Int. Cl.: F24C 7/00, F24C 15/08, A47L 15/42, B23K 11/10, B23K 15/04, D06F 37/26

(54) **HAUSGERÄTEWANDUNGSANORDNUNG UND VERFAHREN ZUR BEFESTIGUNG VON WANDUNGSTEILEN BEI EINEM HAUSGERÄT**
DOMESTIC APPLIANCE WALL ARRANGEMENT AND METHOD FOR FIXING WALL PARTS IN A DOMESTIC APPLIANCE
AGENCEMENT DE PAROIS D'UN APPAREIL MÉNAGER ET PROCÉDÉ DE FIXATION D'ÉLÉMENTS PAROI D'UN APPAREIL MÉNAGER

(30) Priorität: 30.11.2006 DE 102006056576; 22.02.2007 DE 102007008772
(43) Veröffentlichungstag der Anmeldung: 09.09.2009
(73) Patentinhaber: BSH Hausgeräte GmbH, 81739 München (DE); BLANCO CS GmbH + Co KG, 75038 Oberderdingen (DE)
(72) Erfinder: ERDMANN, Klaus, 75438 Knittlingen (DE); WURST, Wolfgang, 72760 Reutlingen (DE); BRUNNER, Dieter, 76571 Gaggenau (DE)
(86) Internationale Anmeldenummer: PCT/EP2007/062224
(87) Internationale Veröffentlichungsnummer: WO 2008/064992

(56) Entgegenhaltungen:
- EP-A1- 0 254 500
- EP-A1- 1 400 302
- DE-A1- 3 840 344
- DE-A1- 10 314 500
- DE-C1- 4 220 340
- US-A- 2 644 443
- US-A- 2 646 762
- US-A- 2 646 762
- US-A- 3 033 188
- US-A- 4 916 284
- ANONYM: "Plasma-Stichloch-Schweißen" INTERNET ARTIKEL, [Online] XP002479471 Gefunden im Internet: URL:http://80.64.191.50/index.php?aktuell= 21_1>
- ANONYMOUS: "Welding Formulas" INTERNET ARTICLE, [Online] XP002479472 Gefunden im Internet: URL:http://www.ecs.umass.edu/mie/labs/mda/ dlib/machine/weld/formula.html>

## Beschreibung

Die Erfindung geht aus von einem Verfahren zur Befestigung von zumindest zwei Wandungsteilen bei einem Hausgerät, insbesondere bei einem Backofen oder Geschirrspüler, nach dem Oberbegriff des Anspruchs 1.

Es ist aus der EP 0 660 048 B1 eine als Backofenmuffel ausgebildete Garvorrichtungswandungsanordnung bekannt. Diese Backofenmuffel weist mehrere Wandungsteile auf, und zwar einen Bodenwandungsteil, Seitenwandungsteile und einen Deckenwandungsteil, die einen Backofenmantel bilden, sowie einen Rückwandungsteil, welcher am Backofenmantel mittels Schweißverbindungen befestigt ist und einen Backraum verschließt.

Weitere herkömmliche Hausgerätewandungsanordnungen mit zwei Wandungsteilen, die mittels einer Schweißnaht befestigt sind, ergeben sich aus den Druckschriften US 3 033 188 A und EP 0 254 500 A1.

Die Aufgabe der Erfindung besteht insbesondere darin, eine Hausgerätewandungsanordnung bereitzustellen, bei der eine besonders langlebige und robuste Befestigung der Wandungsteile miteinander erreicht werden kann.

Die Aufgabe wird erfindungsgemäß durch die Merkmale des Patentanspruchs gelöst, während vorteilhafte Ausgestaltungen und Weiterbildungen der Erfindung den Unteransprüchen entnommen werden können.

Die Erfindung geht aus von einem Verfahren zur Befestigung von zumindest zwei Wandungsteilen bei einer Hausgerätevorrichtung, insbesondere einem Backofen oder Geschirrspüler, bei dem die Wandungsteile miteinander verschweißt werden, wobei eines der Wandungsteile einen dritten Teilbereich bildet, der das andere Wandungsteil umgreift, wobei das Schweißen vollständig durch eines der Wandungsteile hindurch erfolgt, wobei eine Schweißnaht an beiden Wandungsseiten dieses Wandungsteils sichtbar ist und der dritte Teilbereich mit dem anderen Wandungsteil einen Auffangraum bildet, welcher bei dem Schweißvorgang mit Schweißnahtmaterial gefüllt wird, wobei die Wandungsteile eine einem Hausgeräteraum zugewandte Innenwandungsfläche und eine Außenwandungsfläche bilden und eine Schweißvorrichtung entlang der Außenwandungsfläche gefahren wird.

Die Schweißnaht durchdringt zumindest eines der Wandungsteile. Es kann dadurch eine hohe Nahtqualität erreicht werden, wodurch eine robuste, langlebige Schweißverbindung erzielt werden kann. Insbesondere kann eine gleichmäßige Verteilung von Schweißnahtmaterial und somit eine vorteilhafte Verteilung von Spannkräften innerhalb der Schweißverbindung erreicht werden. Erfindungsgemäß durchdringt die Schweißnaht eines der Wandungsteile vollständig, wobei die Schweißnaht an beiden Wandungsseiten dieses Wandungsteils sichtbar ist. Die Wandungsteile bilden die dem Hausgeräteraum, wie einem Garraum oder einem Spülraum, zugewandte Innenwandungsfläche. Die Erfindung eignet sich insbesondere bei Wandungsteilen, die als Garraumwandungen ausgebildet sind, welche einen Garraum, insbesondere ein Backrohr, bilden. Dabei kann eine hohe Robustheit der Schweißnaht, insbesondere im Hinblick auf abwechselnde Aufwärmungs- und Abkühlungsprozesse des Garraums, erreicht werden. Die Schweißnaht, die zumindest eine der Hausgeräteraumwandungen vollständig durchdringt, ist an der Außenwandungsfläche der Hausgeräteraumwandung aus einem Beobachtungspunkt außerhalb des Hausgeräteraums sichtbar.

Zudem weist eines der Wandungsteile einen Teilbereich auf, welcher das andere Wandungsteil umgreift, wodurch eine kompakte Bauweise und eine hohe Stabilität erreicht werden können. Der Teilbereich bildet dabei mit dem anderen Wandungsteil einen Überlappungsbereich der Hausgerätewandungsanordnung, in dem sich die Wandungsteile überlappen.

Der Teilbereich bildet im Zusammenwirken mit dem anderen Wandungsteil einen Auffangraum zum Auffangen von Schweißnahtmaterial bei der Herstellung der Schweißnaht. Dadurch kann einfach mit hohem Komfort eine präzise Ausgestaltung der Schweißnaht erreicht werden. Der Auffangraum ist zu einem Verfließen von geschmolzenem Schweißnahtmaterial in einem durch die Wandungsteile begrenzten Innenraum, insbesondere in einem Garraum oder einem Spülraum, vorgesehen. Insbesondere kann das flüssige Schweißnahtmaterial im Auffangraum vorteilhaft geführt werden. Durch ein Versteifen von Schweißnahtmaterial im Auffangraum kann der Überlappungsbereich zwischen den Wandungsteilen von der Schweißnaht spaltfrei verschlossen werden, wobei eine spaltfreie Fuge, insbesondere ein ebener Übergang, zwischen den Wandungsteilen erreicht werden kann. Dies ist im Hinblick auf Korrosion und Eindringen von Schmutzpartikeln in die Befestigungsschnittstelle zwischen den Wandungsteilen besonderes vorteilhaft. Ferner kann durch ein geführtes Verfließen von Schweißnahtmaterial im Auffangraum eine Fuge erreicht werden, die für einen Bediener eine geringe optische Auffälligkeit aufweist und einen geringen Reinigungsaufwand bietet.

Vorzugsweise ist die Schweißnaht als Stichlochschweißnaht ausgeführt. Dadurch kann eine besonders hohe Präzision in der Herstellung der Schweißverbindung erreicht werden. Außerdem kann eine lokal begrenzte Einbringung von Wärme erreicht werden. Unter einer "Stichlochschweißnaht" kann in diesem Zusammenhang eine Schweißnaht verstanden werden, die mittels eines Stichlochschweißens hergestellt wird. Die Stichlochschweißnaht wird ferner vorzugsweise mittels eines. Plasmaschweißens hergestellt. Dabei wird auf bekannte Weise mittels einer Elektrode und eines Plasmagases ein hoch erhitzter thermischer Plasmastrahl als Wärmequelle erzeugt, welcher das zu bearbeitende Wandungsteil durchdringt. Der Plasmastrahl wird entlang der Oberfläche des Wandungsteils bewegt. Hinter ihm fließt der geschmolzene Werkstoff zusammen und bildet die Schweißnaht.

In einer vorteilhaften Ausgestaltung der Erfindung wird vorgeschlagen, dass eines der Wandungsteile als Rückwandungsteil ausgebildet ist, das gegenüber einer Hausgeräteraumöffnung angeordnet ist. Der Befestigungsprozess des Rückwandungsteils, welcher herkömmlicherweise durch eine schlechte Zugänglichkeit der Befestigungsschnittstelle erschwert wird, kann vorteilhaft vereinfacht werden.

Ein besonders einfacher Befestigungsprozess kann erreicht werden, wenn die Schweißnaht das Rückwandungsteil durchdringt.
Eine bevorzugte Ausgestaltung der Hausgerätewandungsanordnung sieht vor, dass das Wandungsteil, an dem das Rückwandungsteil befestigt ist, als rohrförmiges, vorzugsweise einen Muffelmantel bildendes Bauteil ausgebildet ist. Hierbei kann vorteilhaft ein Stichlochschweißen angewendet werden, welches sich insbesondere für ein Schweißen von Längsnähten an rohrförmigen Bauteilen eignet.

Die Wandungsteile begrenzen den Hausgeräteraum, insbesondere einen Garraum oder einen Spülraum, wobei die Schweißnaht einen Teilbereich bildet, welcher im Hausgeräteraum angeordnet ist, wodurch zusätzlich zur Befestigungsfunktion der Schweißnaht ein vorteilhafter Schutz des Hausgeräteraums erreicht werden kann.

Zweckmäßigerweise bildet der Teilbereich eine entlang des Hausgeräteraumumfangs umlaufende Fuge. Dadurch kann ein vorteilhaftes Verschließen des Hausgeräteraums im Bereich der Befestigungsschnittstelle zwischen den beiden Wandungsteilen erreicht werden, ohne dafür zusätzlich zur Schweißnaht zusätzliches Fugenmaterial einsetzen zu müssen. Vorzugsweise ist die Fuge entlang des Hausgeräteraumumfangs vollständig umlaufend ausgebildet, wodurch ein besonders effektiver Schutz, insbesondere im Hinblick auf Korrosion und Eindringen von Schmutzpartikeln in die Befestigungsschnittstelle, erreicht werden kann.

Ferner wird vorgeschlagen, dass zumindest eines der Wandungsteile zumindest aus einem Edelmetall hergestellt ist. Dadurch kann ein hoher Schutz der Hausgerätewandungsanordnung, insbesondere im Bezug auf Korrosion, erreicht werden. Beispielsweise ist zumindest eines der Wandungsteile aus Edelstahl hergestellt.

Durch das Verfahren zur Befestigung von zumindest zwei Wandungsteilen bei einem Hausgerät, insbesondere einem Backofen oder einem Geschirrspüler, bei dem die Wandungsteile miteinander verschweißt werden, wobei das Schweißen durch eines der Wandungsteile hindurch erfolgt, kann eine hohe Nahtqualität erreicht werden, wodurch eine robuste, langlebige Schweißverbindung erzielt werden kann. Insbesondere kann eine gleichmäßige Verteilung von Schweißnahtmaterial und somit eine vorteilhafte Verteilung von Spannkräften innerhalb der Schweißverbindung erreicht werden.

Erfindungsgemäß bildet eines der Wandungsteile, insbesondere ein Rückwandungsteil, einen Teilbereich, der das andere Wandungsteil, insbesondere einen Muffelmantel, umgreift und mit dem anderen Wandungsteil einen Auffangraum bildet, welcher bei dem Schweißvorgang mit Schweißnahtmaterial gefüllt wird. Es kann durch das Fließen und Versteifen von Schweißnahtmaterial im Auffangraum eine in einem durch die Wandungsteile begrenzten Innenraum, insbesondere einem Garraum oder einem Spülraum, liegende Fuge erzielt werden, die ein vorteilhaftes Verschließen des Innenraums nach außen im Bereich der Befestigungsschnittstelle zwischen den Wandungsteilen ermöglicht.

Erfindungsemäß bilden die Wandungsteile die dem Hausgeräteraum zugewandte Innenwandungsfläche und die Außenwandungsfläche, wobei eine Schweißvorrichtung entlang der Außenwandungsfläche gefahren wird. Dadurch kann aufgrund der vorteilhaften Zugänglichkeit der Außenwandungsfläche eine besonders präzise Führung der Schweißvorrichtung, insbesondere eines Schweißkopfs zur Erzeugung eines Lichtbogens, und somit eine hohe Nahtqualität erreicht werden.

Des Weiteren wird vorgeschlagen, dass eines der Wandungsteile als Rückwandungsteil ausgebildet ist, das im montierten Zustand des Hausgeräts gegenüber einer Hausgeräteraumöffnung angeordnet ist und welches mit dem anderen, einen Muffelmantel bildenden Wandungsteil verschweißt wird. Der Befestigungsprozess des Rückwandungsteils an dem Muffelmantel, welcher herkömmlicherweise durch eine schlechte Zugänglichkeit der Befestigungsschnittstelle erschwert wird, kann hierbei Vorteilhaft vereinfacht werden.

Ferner wird vorgeschlagen, dass das Schweißen kontinuierlich entlang des Umfangs eines der Wandungsteile umlaufend durchgeführt wird, wodurch eine vorteilhafte Abdichtungsfunktion der Schweißnaht erzielt werden kann.

Vorzugsweise werden die Wandungsteile miteinander mittels eines Plasmaschweißens befestigt, wodurch eine besonders hohe Nahtqualität erreicht werden kann. Es kann insbesondere eine Stichlochschweißtechnik eingesetzt werden, wobei ein auf bekannnte Weise erzeugter Plasmastrahl eines der zu befestigenden Wandungsteile durchdringt. Hierbei ist von Vorteil, wenn ein Schutzgas in einen durch die Wandungsteile begrenzten Innenraum, insbesondere einen Garraum oder einen Spütraum, in welchen der Plasmastrahl eindringt, eingeführt wird.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Garvorrichtungswandungsanordnung mit einer Garraumöffnung in einer Frontansicht,
- Fig. 2: die Garvorrichtungswandungsanordnung in einer Ansicht von oben,
- Fig. 3a: eine Schnittansicht durch einen Muffelmantel und eine Rückwandung der Garvorrichtungswandungsanordnung,
- Fig. 3b: den mittels einer Schweißnaht mit der Rückwandung verbundenenen Muffelmantel aus Figur 3a,
- Fig. 4: eine perspektivische Ansicht einer Befestigungsschnittstelle zwischen der Rückwandung und dem Muffelmantel,
- Fig. 5: eine Innenansicht eines durch den Muffenmantel und die Rückwandung gebildeten Garraums und
- Fig. 6: einen Backofen, in dem die Garvorrichtungswandungsanordnung aus den vorhergehenden Figuren montiert ist.

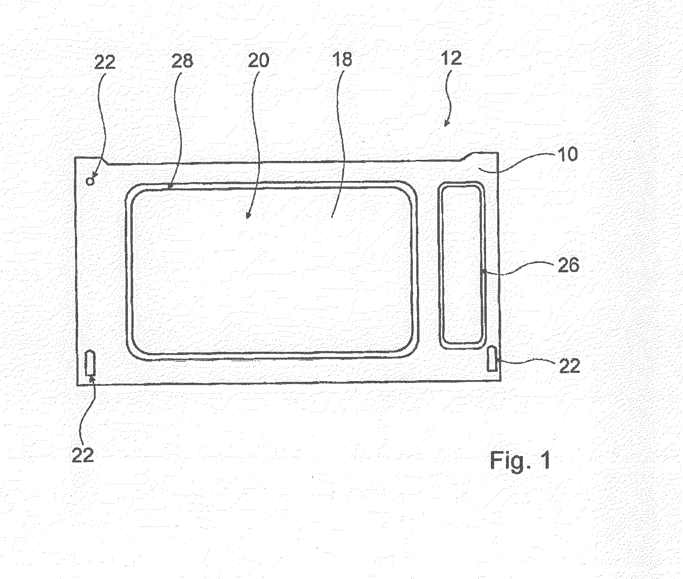

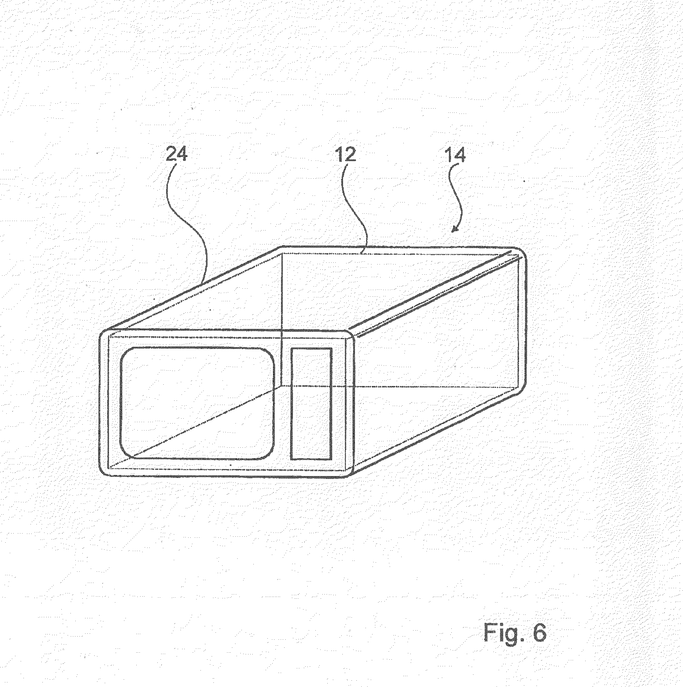

Figur 1 zeigt ein als Frontwandurigsteil ausgebildetes Wandungsteil 10 einer als Garvorrichtungswandungsanordnung 12 ausgebildeten Hausgerätewandungsanordnung einer als Backofen ausgebildeten, in Figur 6 dargestellten Hausgerätevorrichtung 14. Die folgende Beschreibung findet auf weitere Arten von Hausgeräten Anwendung, wie insbesondere bei einem als Geschirrspüler ausgebildeten Hausgerät.

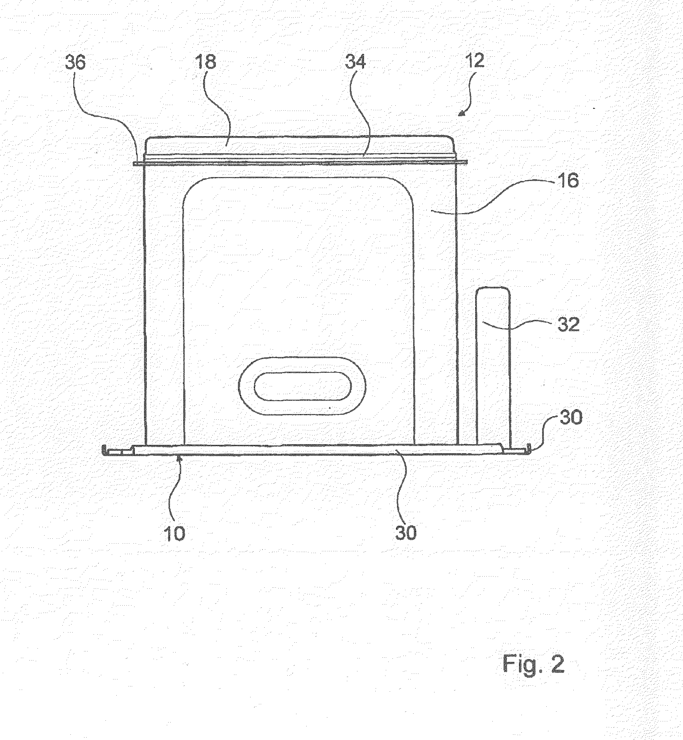

Das Wandungsteil 10 begrenzt im Zusammenwirken mit einem in Figur 2 dargestellten, als Mantelwandungsteil ausgeführten Wandungsteil 16 und einem als Rückwandungsteil ausgebildeten Wandungsteil 18 der Garvorrichtungswandungsanordnung 12 einen als Garraum ausgebildeten Hausgeräteraum 20. Die Wandungsteile 10, 16 und 18 sind aus Edelstahl hergestellt. Das Wandungsteil 10 ist von einem Blechteil gebildet, aus welchem mehrere Öffnungen ausgespart sind. Es sind Öffnungen 22 zur Aufnahme von Befestigungsmitteln, die zur Befestigung des Wandungsteils 10 an einem Gehäuse 24 der Hausgerätevorrichtung 14 (siehe Figur 6) dienen, eine Öffnung 26 zur Aufnahme einer nicht näher dargestellten elektrischen Schalteinheit und eine Öffnung, welche eine als Garraumöffnung ausgebildete Hausgeräteraumöffnung 28 darstellt, zu erkennen. Gegenüber der Hausgeräteraumöffnung 28 angeordnet ist das als Rückwandungsteil ausgebildete Wandungsteil 18 durch die Hausgeräteraumöffnung 28 zu sehen.

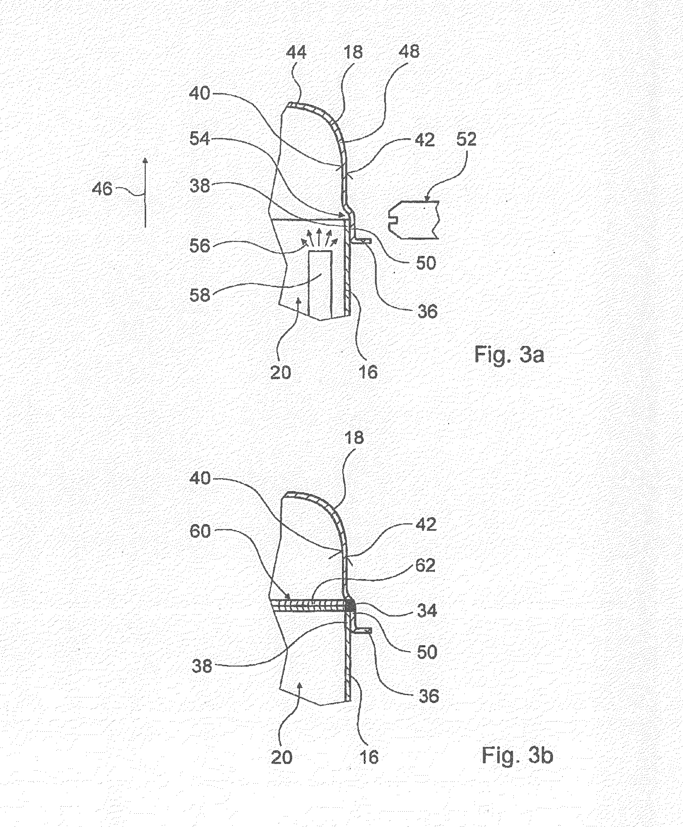

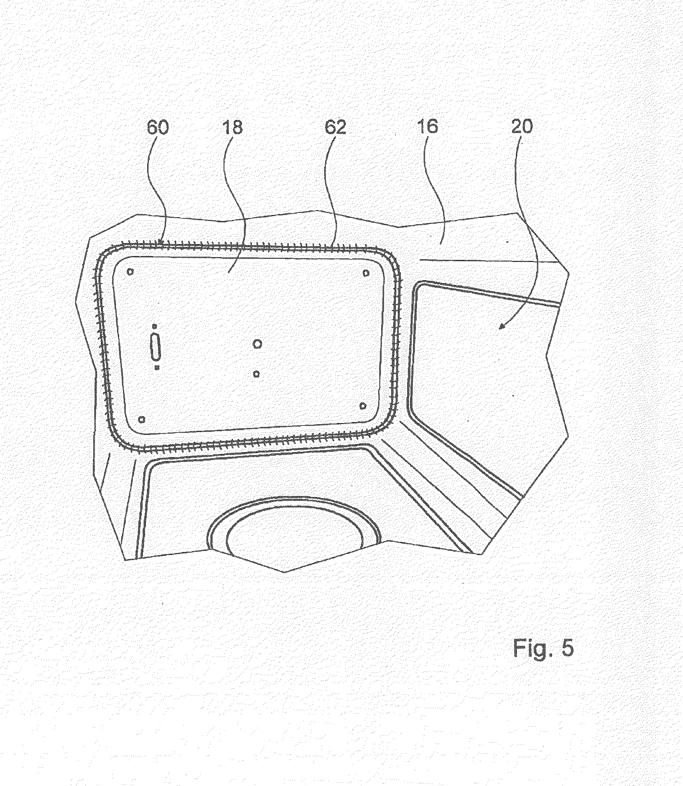

Die Garvorrichtungswandungsanordnung 12 ist in Figur 2 in einer Ansicht von oben dargestellt. Es ist das als Frontwandungsteil ausgebildete Wandungsteil 10 zu erkennen, an welchem Befestigungsschenkel 30 zur Befestigung am Gehäuse 24 angeformt sind. Durch die in Figur 1 dargestellte Öffnung 26 kann eine elektrische Schalteinheit in ein Gehäuse 32 eingeschoben werden, welches vorzugsweise aus Kunststoff hergestellt ist. Es ist ferner das als Mantelwandungsteil ausgebildete Wandungsteil 16 zu erkennen. Das Wandungsteil 16 ist rohrförmig ausgebildet (siehe insbesondere Figur 5) und ist mittels einer Schweißverbindung im Frontbereich der Garvorrichtungswandungsanordnung 12 mit dem als Frontwandungsteil ausgebildeten Wandungsteil 10 befestigt. Außerdem ist das Wandungsteil 16 im Rückbereich am als Rückwandungsteil ausgeführten Wandungsteil 18 mittels einer Schweißverbindung befestigt. Von dieser Schweißverbindung ist von außen eine Schweißnaht 34 sichtbar, die das als Rückwandungsteil ausgeführte Wandungsteil 18 durchdringt (siehe insbesondere Figur 3b). Das Wandungsteil 18 ist bei einer Montage auf das Wandungsteil 16 leicht aufgeschoben bzw. aufgepresst, so dass ein Teilbereich des Wandungsteils 16 in das Wandungsteil 18 eingreift. An das Wandungsteil 18 ist ferner ein Schenkel 36 angeformt, welcher sich entlang des Umfangs des Wandungsteils 18 umlaufend erstreckt.

Die Figuren 3a und 3b zeigen die Anordnung des als Mantelwandungsteil ausgeführten Wandungsteils 16 und des als Rückwandungsteil ausgebildeten Wandungsteils 18 in einer Schnittansicht. Dabei ist der Schnitt parallel zur Blattebene in Figur 2 ausgeführt.

In Figur 3a werden die Wandungsteile 16 und 18 vor einem Schweißvorgang dargestellt. In der in der Figur dargestellten Konfiguration ist das als Rückwandungsteil ausgebildete Wandungsteil 18 auf das als Mantelwandungsteil ausgeführte Wandungsteil 16 aufgepresst. Dabei weist das Wandungsteil 16 einen Teilbereich 38 auf, welcher in das Wandungsteil 18 eingreift. Dieser Teilbereich 38 entspricht dem hinteren Kantenbereich des Wandungsteils 16. Die Wandungsteile 16, 18 bilden im Zusammenwirken eine Innenwandungsfläche 40, welche dem Hausgeräteraum 20 zugewandt ist bzw. den Hausgeräteraum 20 begrenzt. Sie bilden ferner eine Außenwandungsfläche 42, die aus einem Beobachtungspunkt außerhalb des Hausgeräteraums 20 sichtbar ist. Das Wandungsteil 18 weist einen ersten Teilbereich 44 auf, welcher einen ersten Abschnitt der Innenwandungsfläche 40 bildet, der senkrecht zur Haupterstreckungsrichtung 46 des Wandungsteils 16 und gegenüber der Hausgeräteraumöffnung 28 angeordnet ist. Der erste Teilbereich 44 setzt sich über einen Abbug in einen zweiten Teilbereich 48 fort, welcher einen zweiten Abschnitt der Innenwandungsfläche 40 bildet, der parallel zur Haupterstreckungsrichtung 46 des Wandungsteils 16 ausgerichtet ist und einen Teil des Hausgeräteraums 20 umschließt. Von diesem zweiten Teilbereich 48 ist ein dritter Teilbereich 50 über einen Abbug nach außen abgesetzt. Dieser Teilbereich 50 umgreift das Wandungsteil 16. Hierbei überlappt der Teilbereich 50 des Wandungsteils 18 den Teilbereich 38 des Wandungsteils 16. Nach einem einen Winkel von 90° bildenden Abbug setzt sich der Teilbereich 50 in den Schenkel 36 fort.

Zum Verschweißen der Wandungsteile 16, 18 miteinander wird eine als Plasmaschweißvorrichtung ausgebildete Schweißvorrichtung 52 in die Nähe der Außenwandungsfläche 42 angebracht. Diese Schweißvorrichtung 52 erzeugt auf bekannte Weise einen Plasma-Lichtbogen, der sich zwischen einer nicht näher dargestellten Wolframelektrode der Schweißvorrichtung 52 und dem als Rückwandungsteil ausgebildeten Wandungsteil 18 erstreckt. Mittels der Schweißvorrichtung 52 wird ein Stichlochschweißen durchgeführt. Dabei durchdringt der Plasma-Lichtbogen das Material des Wandungsteils 18, wobei der Plasmastrahl im Hausgeräteraum 20 an der Innenwandungsfläche 40 sichtbar ist. Das Schweißen wird in Höhe des das Wandungsteil 16 überlappenden Teilbereichs 50 des Wandungsteils 18 durchgeführt. Durch die mittels des Plasma-Lichtbogens angebrachte Wärme verschmilzt Material des Teilbereichs 38 des Wandungsteils 16 und des Teilbereichs 50 des Wandungsteils 18, wodurch das Schweißnahtmaterial gebildet wird. Die Schweißvorrichtung 52 wird entlang des Umfangs des Wandungsteils 18 gefahren. Hinter dem Plasma-Lichtbogen verfließt das Schweißnahtmaterial im Hausgeräteraum 20, und zwar innerhalb eines Auffangraums 54, welcher von dem abgesetzten Teilbereich 50 des Wandungsteils 18 im Zusammenwirken mit dem Teilbereich 38 des Wandungsteils 16 gebildet ist. Das Schweißnahtmaterial versteift dann in diesem Auffangraum 54 und bildet die Schweißnaht 34. Die Schweißvorrichtung 52 wird umlaufend entlang der Außenwandungsfläche 42 gefahren, bis die Ausgangsstelle wieder erreicht ist, wodurch die Schweißnaht 34 in Umfangsrichtung des Wandungsteils 18 geschlossen ist. Während die Schweißvorrichtung 52 entlang der Außenwandungsfläche 42 gefahren wird, wird ein Schutzgas 56 in den von den Wandungsteilen 16, 18 begrenzten Innenraum, und zwar den Hausgeräteraum 20, eingeführt, wie mittels einer Düse 58 schematisch dargestellt ist. Ferner wird während des Schweißvorgangs eine Presskraft des Wandungsteils 18 auf das Wandungsteil 16 aufrechterhalten. Der Schenkel 36 kann dabei vorteilhafterweise zur Aufrechterhaltung dieser Presskraft genutzt werden.

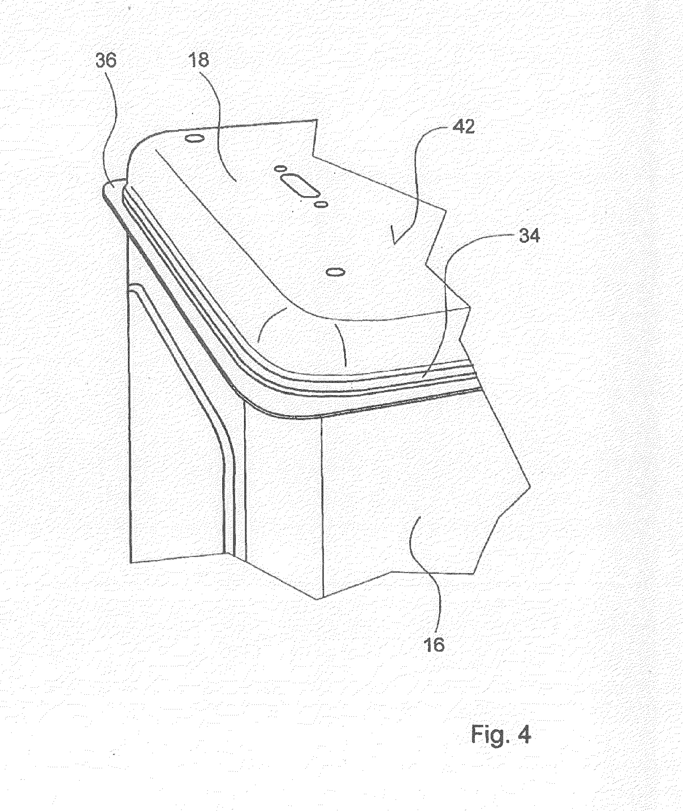

Die Anordnung der Wandungsteile 16, 18 nach dem Schweißvorgang ist in Figur 3b in einer Schnittansicht und in Figur 4 in einer perspektivischen Ansicht von außen dargestellt. Wie der Figur 3b zu entnehmen ist, weist die hergestellte Schweißnaht 34 einen Teilbereich 60 auf, welcher im Hausgeräteraum 20 angeordnet ist. Dieser Teilbereich 60 bildet eine Fuge 62, die die Wandungsteile 16, 18 miteinander verbindet und sich entlang des Umfangs des Hausgeräteraums 20 umlaufend erstreckt (siehe auch Figur 5). Dadurch wird mittels der Schweißnaht 34 zusätzlich zu deren Befestigungsfunktion ein Verschließen des Hausgeräteraums 20 nach außen erreicht. Der Überlappungsbereich zwischen den Teilbereichen 38 und 50 ist von der Schweißnaht spaltfrei verschlossen. Die Schweißnaht 34 bildet einen spaltfreien und glatten Übergang der Innenwandungsfläche 40 zwischen den Wandungsteilen 16 und 18. Dieser Übergang weist eine geringe optische Auffälligkeit auf und bietet einen Schutz gegen ein Eindringen von Schmutzpartikeln in den Überlappungsbereich sowie gegen Korrosion.

In Figur 5 ist der Hausgeräteraum 20 in einer perspektivischen Ansicht von innen zu sehen. Zu erkennen sind die Wandungsteile 16 und 18, die mittels der von der Schweißnaht 34 gebildeten Fuge 62 miteinander verbunden sind. Diese Fuge 62 erstreckt sich entlang des Umfangs des Hausgeräteraums 20 vollständig umlaufend.

Figur 6 zeigt die als Backofen ausgebildete Hausgerätevorrichtung 14. Diese weist das Gehäuse 24 auf, in welchem, wie schematisch angedeutet, die Garvorrichtungswandungsanordnung 12 montiert ist.

### Bezugszeichen

- 10: Wandungsteil
- 12: Garvorrichtungswandungsanordnung
- 14: Hausgerätevorrichtung
- 16: Wandungsteil
- 18: Wandungsteil
- 20: Hausgeräteraum
- 22: Öffnung
- 24: Gehäuse
- 26: Öffnung
- 28: Hausgeräteraumöffnung
- 30: Befestigungsschenkel
- 32: Gehäuse
- 34: Schweißnaht
- 36: Schenkel
- 38: Teilbereich
- 40: Innenwandungsfläche
- 42: Außenwandungsfläche
- 44: erster Teilbereich
- 46: Haupterstreckungsrichtung
- 48: zweiter Teilbereich
- 50: dritter Teilbereich
- 52: Schweißvorrichtung
- 54: Auffangraum
- 56: Schutzgas
- 58: Düse
- 60: weiterer Teilbereich
- 62: Fuge

## Patentansprüche

1. Verfahren zur Befestigung von zumindest zwei Wandungsteilen (16, 18) bei einer Hausgerätevorrichtung (14), insbesondere einem Backofen oder Geschirrspüler, bei dem die Wandungsteile (16, 18) miteinander verschweißt werden, wobei eines der Wandungsteile (18) einen dritten Teilbereich (50) bildet, der das andere Wandungsteil (16) umgreift, **dadurch gekennzeichnet, dass** das Schweißen vollständig durch eines der Wandungsteile (18) hindurch erfolgt, wobei eine Schweißnaht (34) an beiden Wandungsseiten dieses Wandungsteils (18) sichtbar ist und der dritte Teilbereich (50) mit dem anderen Wandungsteil (16) einen Auffangraum (54) bildet, welcher bei dem Schweißvorgang mit Schweißnahtmaterial gefüllt wird, wobei die Wandungsteile (16, 18) eine einem Hausgeräteraum (20) zugewandte Innenwandungsfläche (40) und eine Außenwandungsfläche (42) bilden und eine Schweißvorrichtung (52) entlang der Außenwandungsfläche (42) gefahren wird.

2. Verfahren nach Anspruch 1, **dadurch gekennzeichnet, dass** die Schweißnaht (34) als Stichlochschweißnaht ausgeführt wird.

3. Verfahren nach einem der vorhergehenden Ansprüche, **dadurch gekennzeichnet, dass** die Wandungsteile (16, 18) einen Hausgeräteraum (20) begrenzen und die Schweißnaht (34) einen Teilbereich (60) bildet, welcher im Hausgeräteraum (20) angeordnet wird.

4. Verfahren nach einem der vorhergehenden Ansprüche, **dadurch gekennzeichnet, dass** zumindest eines der Wandungsteile (16, 18) zumindest aus einem Edelmetall hergestellt wird.

5. Verfahren nach einem der vorhergehenden Ansprüche, **dadurch gekennzeichnet, dass** eines der Wandungsteile (18) als Rückwandungsteil ausgebildet ist, das im montierten Zustand der Hausgerätevorrichtung (14) gegenüber einer Hausgeräteraumöffnung (28) angeordnet ist und welches mit dem anderen, einen Muffelmantel bildenden Wandungsteil (16) verschweißt wird.

6. Verfahren nach einem der vorhergehenden Ansprüche, **dadurch gekennzeichnet, dass** das Schweißen kontinuierlich entlang des Umfangs eines der Wandungsteile (18) umlaufend durchgeführt wird.

7. Verfahren nach einem der vorhergehenden Ansprüche, **dadurch gekennzeichnet, dass** die Wandungsteile (16, 18) miteinander mittels eines Plasmaschweißens befestigt werden.

8. Verfahren nach Anspruch 7, **dadurch gekennzeichnet, dass** ein Schutzgas (56) in einen durch die Wandungsteile (16, 18) begrenzten Innenraum eingeführt wird.

## Claims

1. Method for attaching at least two wall parts (16, 18) in the case of a household appliance device (14), in particular an oven or dishwasher, in which the wall parts (16, 18) are welded to one another, wherein one of the wall parts (18) forms a third subregion (50) which encompasses the other wall part (16), **characterised in that** the welding is entirely effected through one of the wall parts (18), wherein a welded joint (34) can be seen on both wall sides of said wall part (18) and the third subregion (50) forms, with the other wall part (16), a collection space (54) which is filled with welding material during the welding operation, wherein the wall parts (16, 18) form an interior wall surface (40), which faces a household appliance space (20), and an exterior wall surface (42), and a welding device (52) is moved along the exterior wall surface (42).

2. Method according to claim 1, **characterised in that** the welded joint (34) is designed as a tap hole welded joint.

3. Method according to one of the preceding claims, **characterised in that** the wall parts (16, 18) delimit a household appliance space (20) and the welded joint (34) forms a subregion (60) which is arranged in the household appliance space (20).

4. Method according to one of the preceding claims, **characterised in that** at least one of the wall parts (16, 18) is produced at least from a precious metal.

5. Method according to one of the preceding claims, **characterised in that** one of the wall parts (18) is designed as a rear wall part, which in the mounted state of the household appliance device (14) is arranged opposite a household appliance space opening (28) and which is welded to the other wall part (16) forming a muffle jacket.

6. Method according to one of the preceding claims, **characterised in that** the welding is performed circumferentially continuously along the perimeter of one of the wall parts (18).

7. Method according to one of the preceding claims, **characterised in that** the wall parts (16, 18) are attached to one another by means of plasma welding.

8. Method according to claim 7, **characterised in that** an inert gas (56) is introduced into an interior space delimited by the wall parts (16, 18).

## Revendications

1. Procédé de fixation d'au moins deux parties de paroi (16, 18) dans un dispositif d'appareil ménager (14), notamment un four ou un lave-vaisselle, dans lequel les parties de paroi (16, 18) sont soudées entre elles, dans lequel une des parties de paroi (18) formant une troisième zone partielle (50) qui entoure l'autre partie de paroi (16), **caractérisé en ce que** le soudage est réalisé en traversant entièrement une des parties de paroi (18), dans lequel une soudure (34) est visible sur les deux faces de cette partie de paroi (18) et la troisième zone partielle (50) forme avec l'autre partie de paroi (16) un espace collecteur (54), lequel est rempli de matériau de soudure lors de l'opération de soudage, dans lequel les parties de paroi (16, 18) forment une surface de paroi intérieure (40) tournée vers un espace (20) d'appareil ménager et une surface de paroi extérieure (42) et **en ce qu'**un dispositif de soudage (52) est mené le long de la surface de paroi extérieure (42).

2. Procédé selon la revendication 1, **caractérisé en ce que** la soudure (34) est réalisée comme soudure en bouchon.

3. Procédé selon l'une des revendications précédentes, **caractérisé en ce que** les parties de paroi (16,18) délimitent un espace (20) d'appareil ménager et **en ce que** la soudure (34) forme une zone partielle (60), laquelle est disposée dans l'espace (20) d'appareil ménager.

4. Procédé selon l'une des revendications précédentes, **caractérisé en ce qu'**au moins une des parties de paroi (16, 18) est fabriquée au moins dans un métal noble.

5. Procédé selon l'une des revendications précédentes, **caractérisé en ce que** l'une des parties de paroi (18) est réalisée comme partie de paroi arrière qui, à l'état monté du dispositif d'appareil ménager (14), est disposée en face d'une ouverture (28) d'espace d'appareil ménager, et est soudée avec l'autre partie de paroi (16) formant une enveloppe de moufle.

6. Procédé selon l'une quelconque des revendications précédentes, **caractérisé en ce que** le soudage est réalisé de manière continue le long du pourtour de l'une des parties de paroi (18) de manière périphérique.

7. Procédé selon l'une quelconque des revendications précédentes, **caractérisé en ce que** les parties de paroi (16, 18) sont fixées entre elles au moyen d'une soudure au plasma.

8. Procédé selon la revendication 7, **caractérisé en ce qu'**un gaz de protection (56) est introduit dans un espace intérieur délimité par les parties de paroi (16, 18).
